# EUROPÄISCHE PATENTANMELDUNG

(11) **EP 2 653 209 A1**
(43) Veröffentlichungstag der Anmeldung: **23.10.2013**
(21) Anmeldenummer: 12164560.0
(22) Anmeldetag: 18.04.2012
(51) Int. Cl.: B01D 53/14, B01D 53/96, B01D 9/00

(54) **Abscheidevorrichtung für Kohlendioxid und Verfahren zu deren Betrieb sowie Abtrenneinheit**

(71) Anmelder: Siemens Aktiengesellschaft, 80333 München (DE)
(72) Erfinder: Forbert, Rainald, Dr., 85368 Moosburg (DE); Hauke, Stefan, 64683 Einhausen (DE); Joh, Ralph, Dr., 63500 Seligenstadt (DE); Kinzl, Markus, Dr., 63128 Dietzenbach (DE); Schneider, Rüdiger, Dr., 65817 Eppstein (DE)

(57) **Zusammenfassung**

Es wird eine Abscheidevorrichtung (2) für Kohlendioxid, insbesondere aus einem Rauchgas (RG) eines fossil befeuerten Kraftwerks, angegeben, die eine Absorptionseinheit (4), eine der Absorptionseinheit (4) zugeordnete Desorptionseinheit (5) und eine Abtrenneinheit (10) zur Abtrennung von Salzen aus einer Waschlösung umfasst. Dabei sind die Absorptionseinheit (4) und die Desorptionseinheit (5) über eine erste Leitung (6) für eine regenerierte Waschlösung (A) und eine zweite Leitung (7) für eine beladene Waschlösung (A') miteinander verbunden. Die Abtrenneinheit (10) umfasst einen Kristallisator (20) zur Bildung von Salzkristallen und eine hierzu abströmseitige erste Separiereinheit (25) zur Abtrennung der Salzkristalle. Weiter wird ein entsprechendes Verfahren zum Betrieb der Abscheidevorrichtung (2) angegeben. Desweiteren wird eine Abtrenneinheit (10) zur Abtrennung von Salzen aus einer Waschlösung (10) angegeben, welche einen Kristallisator (20) und eine hierzu abströmseitige erste Separiereinheit (25) zur Abtrennung von Salzkristallen umfasst. Der Kristallisator (20) umfasst eine Kristallisationskammer (21) zur Bildung der Salzkristalle und einen Gegenstrom-Klassierer (22) zur Trennung der Salzkristalle ihrer Partikelgröße nach. An die Kristallisationskammer (21) ist eine erste Abzweigleitung (32) angeschlossen, die über eine zweite Separiereinheit (26) in den Gegenstrom-Klassierer (22) mündet.

## Beschreibung

Die Erfindung betrifft eine Abscheidevorrichtung für Kohlendioxid, insbesondere aus einem Rauchgas eines fossil befeuerten Kraftwerks sowie ein Verfahren zum Betrieb einer derartigen Abscheidevorrichtung. Die Erfindung betrifft weiter eine Abtrenneinheit zur Abtrennung von Salzen aus einer Waschlösung.

Bei einer fossil befeuerten Kraftwerksanlage zur Erzeugung elektrischer Energie entsteht durch die Verbrennung eines fossilen Brennstoffs ein kohlendioxidhaltiges Rauchgas. Neben Kohlendioxid enthält das Rauchgas weitere Verbrennungsprodukte wie beispielsweise die Gase Schwefeldioxid und Stickstoffdioxid sowie Festkörperpartikel, Staub und Ruß. Das Rauchgas wird üblicherweise nach einer weitgehenden Abscheidung der Festkörperbestandteile in die Atmosphäre entlassen.

Die durch den Menschen verursachte Erhöhung des Anteils an Kohlendioxid in der Erdatmosphäre wird jedoch als Hauptursache für den als Klimawandel bezeichneten Anstieg der Erdoberflächentemperaturen verantwortlich gemacht. In der Atmosphäre befindliches Kohlendioxid behindert nämlich die Wärmeabstrahlung von der Erdoberfläche ins All, was allgemein als Treibhauseffekt bekannt ist.

Insofern werden bei bestehenden Kraftwerksanlagen geeignete Sekundärmaßnahmen diskutiert, um nach der Verbrennung das entstandene Kohlendioxid aus dem Rauchgas zu entfernen. Als eine technische Möglichkeit zur Abscheidung von Kohlendioxid aus dem Rauchgas nach einem Verbrennungsprozess (Post Combustion Capture) wird hierzu das Rauchgas mit einer Waschlösung in Kontakt gebracht, die mit einem geeigneten Absorptionsmittel für Kohlendioxid versetzt ist. Hierbei wird das Kohlendioxid aus dem Rauchgas herausgewaschen.

In einem klassischen Absorptions-Desorptions-Prozess wird das Rauchgas dabei in einer Absorptionseinheit mit der Waschlösung in Kontakt gebracht, wodurch insbesondere Kohlendioxid absorbiert bzw. reversibel gebunden wird. Das so gereinigte Rauchgas wird aus der Absorptionseinheit ausgelassen, wohingegen die mit Kohlendioxid beladene Waschlösung zur Abtrennung des Kohlendioxids und Regenerierung der Waschlösung in eine Desorptionseinheit geleitet wird. Dort erfolgt üblicherweise eine thermische Abtrennung, das heißt, das Kohlendioxid wird durch Zufuhr von Wärme desorbiert. Das Kohlendioxid wird schließlich beispielsweise mehrstufig verdichtet und gekühlt und einer Lagerung oder Verwertung zugeführt. Die regenerierte Waschlösung wird zur Absorptionseinheit zurückgeleitet, wo sie wieder zur Absorption von Kohlendioxid zur Verfügung steht.

Im Rahmen eines derartigen Absorptions-Desorptions-Prozesses kommt üblicherweise eine chemische Absorption mit einer basischen Waschlösung zum Einsatz. Bei einer derartigen Absorption reagieren die sauren Rauchgaskomponenten mit dem in der Waschlösung enthaltenen basischen Absorptionsmittel. Am aussichtsreichsten erscheinen derzeit aminhaltige Absorptionsmittel, wobei als Amine insbesondere Alkanolamine, aber auch komplexere sterisch gehinderte Amine mit großen Alkylgruppen, zyklische Amine, Aminosäuren oder Aminosäuresalze eingesetzt werden. Die eingesetzten Amine bilden mit Kohlendioxid entweder Carbamate, oder das Kohlendioxid reagiert in der Waschlösung indirekt zu Hydrogencarbonat und einem protonierten Amin.

Unerwünschterweise werden in einer aminhaltigen Waschlösung neben Kohlendioxid auch andere saure Gase, insbesondere Stickoxide und/oder Schwefeloxide, absorbiert. Anders als Kohlendioxid bilden die weiteren Gase mit den aminhaltigen Absorptionsmitteln jedoch unter anderem temperaturbeständige Salze (engl.: "Heat Stable Salts" HSS), die in der Desorptionseinheit nicht mehr zurückgebildet werden können. Diese temperaturbeständigen Salze senken während des Betriebs durch die hierdurch bedingte Abnahme der Aminkonzentration sukzessive die Kapazität der Waschlösung zur Aufnahme von Kohlendioxid. Darüber hinaus begünstigen sie gegebenenfalls die Korrosion und verändern die Fließeigenschaften der Waschlösung negativ.

Es ist daher eine erste Aufgabe der Erfindung, eine Abscheidevorrichtung für Kohlendioxid, insbesondere aus einem Rauchgas eines fossil befeuerten Kraftwerks, anzugeben, welche eine Abtrennung von Salzen aus einer Waschlösung ermöglicht.

Eine zweite Aufgabe ist es, ein Verfahren zur Abscheidung von Kohlendioxid, insbesondere aus einem Rauchgas eines fossil befeuerten Kraftwerks, bereitzustellen, durch welches Salze aus einer Waschlösung abgetrennt werden können.

Eine dritte Aufgabe der Erfindung ist es, eine Abtrenneinheit zur Abtrennung von Salzen aus einer Waschlösung anzugeben.

Die erste Aufgabe wird erfindungsgemäß gelöst durch die Merkmale des Anspruchs 1. Vorteilhafte Ausführungsformen und Weiterentwicklungen der Erfindung sind in den Unteransprüchen und der nachfolgenden Beschreibung dargelegt.

Demnach umfasst die erfindungsgemäße Abscheidevorrichtung für Kohlendioxid, insbesondere aus einem Rauchgas eines fossil befeuerten Kraftwerks, eine Absorptionseinheit, eine der Absorptionseinheit zugeordnete Desorptionseinheit und eine Abtrenneinheit zur Abtrennung von Salzen aus einer Waschlösung. Die Absorptionseinheit und die Desorptionseinheit sind über eine erste Leitung für eine regenerierte Waschlösung und eine zweite Leitung für eine beladene Waschlösung miteinander verbunden. Die Abtrenneinheit umfasst einen Kristallisator zur Bildung von Salzkristallen und eine hierzu abströmseitige erste Separiereinheit zur Abtrennung der Salzkristalle.

Die Erfindung geht dabei von der Überlegung aus, dass die durch Neutralisationsreaktion von einer aminhaltigen Waschlösung mit sauren Rauchgasbestandteilen gebildeten Salze nicht wieder zurückgebildet werden können und diese die Kapazität der Waschlösung zur Aufnahme von Kohlendioxid senken. Die Erfindung geht weiter von der Überlegung aus, die Salze in der Waschlösung zu kristallisieren. Die derart kristallisierten Salze lassen sich dann als Feststoffe verhältnismäßig einfach aus der Waschlösung entfernen. Daher sieht die Erfindung vor, die Waschlösung einer Abtrenneinheit zuzuführen, in welcher die in der Waschlösung enthaltenen Salze mittels eines Kristallisators kristallisiert und die gebildeten Salzkristalle mittels einer Separiereinheit aus der Waschlösung entfernt werden. Dies erlaubt eine Abtrennung der in der Waschlösung enthaltenen Salze und somit eine einfache Aufbereitung der Waschlösung.

Die Absorptionseinheit dient der Absorption des Kohlendioxids durch die Waschlösung, die Desorptionseinheit dient der Desorption des Kohlendioxids. Die erste Leitung verbindet die Desorptionseinheit mit der Absorptionseinheit und führt die regenerierte Waschlösung. Die zweite Leitung verbindet die Absorptionseinheit mit der Desorptionseinheit und führt die beladene Waschlösung. Zur Abtrennung von Salzen kann die Abtrenneinheit unmittelbar in die Abscheidevorrichtung integriert sein. Es ist aber ebenso möglich, die Waschlösung aus der Abscheidevorrichtung zu entnehmen, separat zur Abtrenneinheit zu verfrachten und nach der Abtrennung der Salze in der Abscheidevorrichtung erneut zu verwenden.

Die Keimbildung und das Salzkristallwachstum erfolgen im Wesentlichen im Kristallisator. Hierbei ist die Übersättigung die treibende Kraft für die Kristallisation. Neben einem Verdampfen der Waschlösung kann die Übersättigung insbesondere durch Abkühlen der Waschlösung erzeugt werden. Durch eine entsprechend niedrige Temperatur nimmt die Löslichkeit der Salze in der Waschlösung ab und die auszukristallisierenden Salze werden in Übersättigung gebracht. Dadurch wird die Kristallbildung der Salze ermöglicht.

Bei dem Kristallisator handelt es sich bevorzugt um einen Kristallisator zur kontinuierlichen Kristallisation, das heißt, für den kontinuierlichen Betrieb. Der Kristallisator kann beispielsweise ein Rührwerk oder eine Umwälzpumpe und eine Vorrichtung zum Heizen und/oder Kühlen umfassen. Hierbei ist die wesentliche Aufgabe des Rührwerks bzw. der Umwälzpumpe, die Suspension möglichst homogen zu verteilen und die aus der Desorptionseinheit zugeführte Waschlösung unterzumischen. Die Vorrichtung zum Kühlen kann insbesondere zur Abkühlung der Temperatur der Waschlösung dienen.

Die Partikelgröße der Salzkristalle lässt sich insbesondere über die lokale und mittlere Übersättigung sowie die Verteilung und die Verweilzeit der Salzkristalle in der übersättigten Lösung steuern. Innerhalb der Waschlösung können insbesondere kleine, mittlere und große Salzkristalle vorliegen, wobei diese Einteilung jeweils in Relation der Salzkristalle zueinander zu sehen ist. Mit anderen Worten sind die kleinen Salzkristalle kleiner als die mittleren Salzkristalle und die mittleren Salzkristalle sind wiederum kleiner als die großen Salzkristalle.

Die erste Separiereinheit ist dem Kristallisator strömungstechnisch nachgeschaltet und ist zur Abtrennung der gebildeten Salzkristalle von der Waschlösung ausgebildet. Die durch die erste Separiereinheit abgetrennten Salzkristalle werden einer Lagerung, Entsorgung oder Verwertung zugeführt. Alternativ können insbesondere mittlere und kleine Salzkristalle dem Kristallisator vollständig oder teilweise wieder zugeführt werden, um eine entsprechende Feststoffkonzentration im Kristallisator aufrecht zu erhalten, was sich positiv auf die Kristallisationsleistung des Kristallisators auswirkt. Die Waschlösung, die möglichst keine Salzkristalle mehr enthält, wird zur Absorptionseinheit transportiert bzw. dieser zugeführt.

Die angegebene Abscheidevorrichtung hat den Vorteil, dass mit ihr Salze aus einer Waschlösung abgetrennt werden können. Die Abscheidevorrichtung ermöglicht es, dass die in einer Waschlösung gelösten Salze auskristallisieren und so als Festkörper in der Waschlösung vorliegen, wodurch sie durch eine erste Separiereinheit über eine verhältnismäßig einfache Fest-/Flüssigtrennung dann von der Waschlösung getrennt werden können.

Das in der beladenen Waschlösung enthaltene Kohlendioxid fördert die Löslichkeit der Salze in der Waschlösung und erschwert somit eine Kristallisation der Salze. Bevorzugt wird daher die regenerierte Waschlösung aus der Desorptionseinheit zur Abtrenneinheit transportiert bzw. dieser zugeführt.

Zweckmäßigerweise ist die Abtrenneinheit somit in die erste Leitung geschaltet. Die erste Leitung verbindet dabei die Desorptionseinheit mit der Abtrenneinheit und diese wiederum mit der Absorptionseinheit. Auf diese Weise ist die Abtrenneinheit direkt in den zirkulierenden Kreislauf der Waschlösung zwischen Absorptionseinheit und Desorptionseinheit geschaltet.

In einer vorteilhaften Ausführungsform umfasst der Kristallisator eine Kristallisationskammer zur Bildung der Salzkristalle und eine Klassiereinrichtung zur Trennung der Salzkristalle ihrer Partikelgröße nach. Die Kristallisationskammer besteht dabei aus einem im Wesentlichen zylinderförmigen Behälter, in welchem sich die Waschlösung und die wachsenden Salzkristalle befinden. In der Klassiereinrichtung erfolgt die Trennung der Salzkristalle ihrer Partikelgröße nach. Hierbei werden die großen Salzkristalle weitgehend von den mittleren und kleinen Salzkristallen getrennt. Durch die Trennung wird eine gezieltere Entnahme vor allem der großen Salzkristalle, welche sich einfacher von der Waschlösung trennen lassen, vereinfacht und die mittleren und kleinen Salzkristalle können zum weiteren Anwachsen in der Kristallisationskammer verbleiben. Bevorzugt ist die regenerierte Waschlösung, bevor sie in den Kristallisator der Abtrenneinheit geleitet wird, beispielsweise durch einen Wärmetauscher, auf eine niedrige Temperatur, insbesondere auf 10°C - 15°C, gebracht worden. Dadurch kann die Kristallbildung der Salze ermöglicht bzw. gefördert werden.

Zweckmäßigerweise ist die Klassiereinrichtung als ein Gegenstrom-Klassierer ausgebildet. Dabei ist die Klassiereinrichtung an der Bodenseite der Kristallisationskammer angeformt und umfasst ihrerseits einen im Wesentlichen hohlzylindrischen Körper mit einem insbesondere trichterförmig verlaufenden Boden. An der Mantelfläche des hohlzylindrischen Körpers ist im unteren Bereich in Bodennähe eine Einlassöffnung vorgesehen, über die ein Gegenstrom, der den hohlzylindrischen Körper von der Einlassöffnung nach oben in Richtung Kristallisationskammer durchströmt, eingeleitet wird. Für die Trennung der Salzkristalle ihrer Partikelgröße nach werden sich hierbei die unterschiedlichen Sinkgeschwindigkeiten der Salzkristalle mit unterschiedlicher Partikelgröße zu Nutze gemacht, wobei die Sinkgeschwindigkeit der großen Salzkristalle größer ist als die Sinkgeschwindigkeit der mittleren und kleinen Salzkristalle. Die Salzkristalle, deren Sinkgeschwindigkeit geringer ist als die Geschwindigkeit des Gegenstroms, werden mit dem Gegenstrom nach oben in Richtung Kristallisationskammer transportiert. Salzkristalle mit höherer Sinkgeschwindigkeit bewegen sich durch den hohlzylindrischen Körper nach unten und sammeln sich am Boden der Klassiereinrichtung an. Dabei ist die Geschwindigkeit des Gegenstroms so eingestellt, dass diese kleiner ist als die Sinkgeschwindigkeit der großen Salzkristalle, aber größer als die Sinkgeschwindigkeit der mittleren und kleinen Salzkristalle. Somit sammeln sich am Boden der Klassiereinrichtung im Wesentlichen große Salzkristalle an, welche von dort abgezogen werden können.

An die Kristallisationskammer ist vorteilhafterweise eine erste Abzweigleitung angeschlossen, die über eine zweite Separiereinheit in den Gegenstrom-Klassierer mündet. Die erste Abzweigleitung dient der Entnahme von Waschlösung aus der Kristallisationskammer und der Zuführung zur zweiten Separiereinheit und zum nachgeschalteten Gegenstrom-Klassierer. Die zweite Separiereinheit ist hierbei so eingerichtet, dass sie insbesondere große und mittlere Salzkristalle, die sich in der entnommenen Waschlösung befinden, zurückhält. Diese zurückgehaltenen Salzkristalle werden der Kristallisationskammer wieder zugeführt, um eine entsprechende Feststoffkonzentration innerhalb der Waschlösung aufrecht zu erhalten, welche sich positiv auf die Kristallisationsleistung des Kristallisators auswirkt. Die im Wesentlichen nur noch kleine Salzkristalle enthaltende Waschlösung wird von der zweiten Separiereinheit aus über die erste Abzweigleitung in die Einlassöffnung des Gegenstrom-Klassierers geleitet, wo sie als Gegenstrom fungiert.

Die zweite Separiereinheit ist zweckmäßigerweise als ein Filter ausgebildet. Dabei kann sie insbesondere ein kontinuierlich arbeitendes Filter, wie beispielsweise ein Kantenspaltfilter sein. Alternativ kann die zweite Separiereinheit auch als ein Hydrozyklon oder ein Separator ausgebildet sein.

In einer zweckmäßigen Ausführungsform umfasst die erste Separiereinheit eine Zentrifuge, welche insbesondere eine Siebzentrifuge sein kann. Diese trennt insbesondere die großen Salzpartikel von der Waschlösung ab. Desweiteren kann die erste Separiereinheit noch ein Filter umfassen, welches eventuell noch enthaltene mittlere und kleine Salzkristalle von der Waschlösung trennt. Anstelle der Kombination von Siebzentrifuge und Filter ist es insbesondere auch möglich, dass die erste Separiereinheit beispielsweise eine Siebschneckenzentrifuge umfasst, welche beide Funktionen in sich vereint.

In einer vorteilhaften Ausführungsform ist an den Kristallisator eine zweite Abzweigleitung angeschlossen, die über eine Zerkleinerungseinrichtung wieder in den Kristallisator zurückgeführt ist. Dem Kristallisator kann so über die zweite Abzweigleitung kontinuierlich oder periodisch Waschlösung entnommen werden und die darin enthaltenen Salzkristalle können einem Zerkleinerungsprozess in der Zerkleinerungseinrichtung, beispielsweise einer Mühle oder einem Dispergierer, unterzogen werden. Die zweite Abzweigleitung ist so eingerichtet, dass die zerkleinerten Salzkristalle dann mit der Waschlösung wieder dem Kristallisator zugeführt werden können. Auf diese Weise können dem Kristallisator mehr kleine Salzkristalle zur Verfügung gestellt werden, die anwachsen können, wodurch die Kristallisationsleistung des Kristallisators erhöht wird.

Bevorzugt ist innerhalb der Abtrenneinheit eine erste Zuführeinrichtung für Impfkristalle vorgesehen. Die Impfkristalle können der Waschlösung in dem Kristallisator zugegeben werden. Dort wachsen sie durch Kristallisation an.

Vorteilhafterweise ist innerhalb der Abtrenneinheit eine zweite Zuführeinrichtung für eine Base, insbesondere Kaliumhydroxid, vorgesehen. Durch Zugabe einer Base zum Waschmittel können Protonen abgefangen werden, die durch die Absorption saurer Gase und die Bildung der Salze entstehen.

Der ersten Separiereinheit ist bevorzugt ein "Sicherheits"-Filter nachgeschaltet. Durch das "Sicherheits"-Filter können Salzkristalle, die durch die erste Separiereinheit nicht abgetrennt wurden, zurückgehalten werden.

Die zweite Aufgabe der Erfindung wird erfindungsgemäß gelöst durch die Merkmale des Anspruchs 9. Vorteilhafte Ausgestaltungen und Weiterentwicklungen der Erfindung sind in den Unteransprüchen und der nachfolgenden Beschreibung dargelegt.

In dem erfindungsgemäßen Verfahren zur Abscheidung von Kohlendioxid, insbesondere aus einem Rauchgas eines fossil befeuerten Kraftwerks, wird eine beladene Waschlösung von einer Absorptionseinheit zu einer Desorptionseinheit und eine regenerierte Waschlösung von der Desorptionseinheit zur Absorptionseinheit geführt. Dabei wird die Waschlösung einer Abtrenneinheit zugeführt, in welcher mittels eines Kristallisators in der Waschlösung Salzkristalle gebildet und mittels einer abströmseitigen Separiereinheit abgetrennt werden.

Bevorzugt wird die regenerierte Waschlösung mittels der Abtrenneinheit aufbereitet.

In der Absorptionseinheit wird die Waschlösung durch Absorption des Kohlendioxids mit diesem angereichert. Die derart beladene Waschlösung wird über eine Leitung der Desorptionseinheit zugeführt. In der Desorptionseinheit erfolgt die Desorption des Kohlendioxids und bevorzugt wird die auf diese Weise regenerierte Waschlösung der Abtrenneinheit und anschließend der Absorptionseinheit zugeführt.

Im Wesentlichen erfolgt die Keimbildung und das Salzkristallwachstums im bevorzugt kontinuierlich arbeitenden Kristallisator, in welchen eine Suspension aus Waschlösung und Salzkristallen insbesondere homogen verteilt und neu zugeführte Waschlösung untergemischt wird.

Die Partikelgröße der Salzkristalle wird insbesondere über die lokale und mittlere Übersättigung sowie die Verteilung und die Verweilzeit der Kristalle in der übersättigten Lösung gesteuert. In der Waschlösung liegen insbesondere kleine, mittlere und große Salzkristalle vor. Diese Einteilung ist jeweils in Relation der Salzkristalle zueinander zu sehen, das heißt, dass die kleinen Salzkristalle kleiner als die mittleren Salzkristalle und die mittleren Salzkristalle wiederum kleiner als die großen Salzkristalle sind.

Mittels einer dem Kristallisator strömungstechnisch nachgeschalteten Separiereinheit werden gebildete Salzkristalle von der Waschlösung abgetrennt. Hierfür wird eine insbesondere große Salzkristalle enthaltende Waschlösung aus dem Kristallisator entnommen und der Separiereinheit zugeführt. Die durch die Separiereinheit abgetrennten Salzkristalle werden einer Lagerung, Entsorgung oder Verwertung zugeführt. Alternativ können insbesondere mittlere und kleine Salzkristalle dem Kristallisator vollständig oder teilweise wieder zugeführt werden, um eine entsprechende Feststoffkonzentration im Kristallisator aufrecht zu erhalten, was sich positiv auf die Kristallisationsleistung des Kristallisators auswirkt. Im Kristallisator wachsen diese mittleren und kleinen Salzkristalle dann weiter an. Die Waschlösung, die möglichst keine Salzkristalle mehr enthält, wird der Absorptionseinheit zugeführt.

Das dargestellte Verfahren hat den Vorteil, dass damit Salze aus einer Waschlösung abgetrennt werden können. Durch das Verfahren können die in einer Waschlösung gelösten Salze auskristallisiert und als Festkörper über eine verhältnismäßig einfache Fest-/Flüssigtrennung von der Waschlösung getrennt werden.

In einer vorteilhaften Durchführung des Verfahrens werden die Salzkristalle in einer Kristallisationskammer des Kristallisators gebildet und in einer Klassiereinrichtung des Kristallisators ihrer Partikelgröße nach getrennt. In der Kristallisationskammer befindet sich die Waschlösung mit wachsenden Salzkristallen. In der Klassiereinrichtung werden die Salzkristalle ihrer Partikelgröße nach getrennt. Hierbei werden die großen Salzkristalle, welche sich leichter von der Waschlösung abtrennen lassen, weitgehend von den mittleren und kleinen Salzkristallen getrennt. Durch diese Trennung können vor allem die großen Salzkristalle gezielter entnommen werden, wobei die mittleren und kleinen Salzkristalle in der Kristallisationskammer verbleiben und weiter anwachsen. Bevorzugt wird die regenerierte Waschlösung, bevor sie in den Kristallisator der Abtrenneinheit geleitet wird, auf eine niedrige Temperatur, insbesondere auf 10°C - 15°C, gebracht. Durch eine entsprechend niedrige Temperatur nimmt die Löslichkeit der Salze in der Waschlösung ab und die auszukristallisierenden Salze werden in Übersättigung gebracht. Dadurch wird die Kristallbildung der Salze ermöglicht bzw. gefördert.

Zweckmäßigerweise werden die Salzkristalle mittels eines Gegenstroms ihrer Partikelgröße nach getrennt. Hierfür wird die Klassiereinrichtung von einem Gegenstrom entgegen der Sinkrichtung der Salzkristalle durchströmt. Dabei wird die Geschwindigkeit des Gegenstroms so eingestellt, dass diese kleiner ist als die Sinkgeschwindigkeit der großen Salzkristalle, aber größer als die Sinkgeschwindigkeit der mittleren und kleinen Salzkristalle. Mittlere und kleine Salzkristalle, deren Sinkgeschwindigkeit kleiner ist als die Geschwindigkeit des Gegenstroms, werden mit dem Gegenstrom nach oben in Richtung Kristallisationskammer transportiert. Die großen Salzkristalle, deren Sinkgeschwindigkeit größer ist als die Geschwindigkeit des Gegenstroms, sinken nach unten und sammeln sich am Boden der Klassiereinrichtung an. Dadurch sammeln sich am Boden der Klassiereinrichtung im Wesentlichen große Salzkristalle an, welche von dort abgezogen werden.

Vorteilhafterweise wird der Kristallisationskammer ein erster Teilstrom der Waschlösung abgezogen und in dem ersten Teilstrom enthaltene Salzkristalle werden abgetrennt, wobei der erste Teilstrom der Klassiereinrichtung als Gegenstrom zugeführt wird. Hierbei werden nach der Entnahme aus der Kristallisationskammer zunächst insbesondere große und mittlere Salzkristalle, die sich in der entnommenen Waschlösung befinden, abgetrennt. Diese Salzkristalle werden der Kristallisationskammer wieder zugeführt und wachsen dort weiter an. Der im Wesentlichen nur noch kleine Salzkristalle enthaltene Teilstrom wird anschließend als Gegenstrom in die Klassiereinrichtung geleitet.

Zweckmäßigerweise wird zur Abtrennung der Salzkristalle aus dem ersten Teilstrom filtriert, wodurch insbesondere große und mittlere Salzkristalle von dem ersten Teilstrom abgetrennt werden. Diese abgetrennten großen und mittleren Salzkristalle werden zum weiteren Anwachsen wieder dem Kristallisator zugeführt.

Zur Abtrennung der Salzkristalle mittels der Separiereinheit wird zweckmäßigerweise zentrifugiert. Hierbei werden die Salzpartikel im Wesentlichen durch eine rotierende Trommel unter Ausnutzung der Zentrifugalkraft von der Waschlösung abgetrennt. Die Waschlösung kann optional anschließend noch gefiltert werden, um eventuell in ihr noch enthaltene Salzpartikel möglichst vollständig abzutrennen.

Aus dem Kristallisator wird vorteilhafterweise ein zweiter Teilstrom der Waschlösung abgezogen, in dem zweiten Teilstrom enthaltene Salzkristalle werden zerkleinert, und der zweite Teilstrom wird wieder in den Kristallisator zurückgeführt. Dieser Vorgang kann kontinuierlich oder periodisch durchgeführt werden. Auf diese Weise werden dem Kristallisator mehr kleine Salzkristalle zur Verfügung gestellt, die anwachsen können, wodurch die Kristallisationsleistung des Kristallisators erhöht wird.

Bevorzugt werden der Waschlösung in dem Kristallisator noch Impfkristalle zugegeben, die im Kristallisator weiter anwachsen.

Vorteilhafterweise wird der Waschlösung eine Base, insbesondere Kaliumhydroxid, zugegeben. Durch die Zugabe einer Base können Protonen abgefangen werden, die durch die Absorption saurer Gase und die Bildung der Salze entstehen.

Die Waschlösung kann bevorzugt nach Durchlaufen der Separiereinheit noch filtriert werden. Dadurch können Salzkristalle, die durch die erste Separiereinheit nicht abgetrennt wurden, zurückgehalten werden.

Die dritte Aufgabe der Erfindung wird erfindungsgemäß gelöst durch die Merkmale des Anspruchs 16. Vorteilhafte Ausgestaltungen und Weiterentwicklungen der Erfindung sind in den Unteransprüchen und der nachfolgenden Beschreibung dargelegt.

Demnach umfasst die erfindungsgemäße Abtrenneinheit zur Abtrennung von Salzen aus einer Waschlösung einen Kristallisator und eine hierzu abströmseitige erste Separiereinheit zur Abtrennung von Salzkristallen. Der Kristallisator umfasst eine Kristallisationskammer zur Bildung der Salzkristalle und einen Gegenstrom-Klassierer zur Trennung der Salzkristalle ihrer Partikelgröße nach. An die Kristallisationskammer ist eine erste Abzweigleitung angeschlossen, die über eine zweite Separiereinheit in den Gegenstrom-Klassierer mündet.

Bei der Waschlösung handelt es sich um eine regenerierte Waschlösung für die Abscheidung von Kohlendioxid, insbesondere aus einem Rauchgas eines fossil befeuerten Kraftwerks. Aus der Waschlösung ist das Kohlendioxid bereits desorbiert worden. Diese Waschlösung wird der Abtrenneinheit zugeführt.

Die Partikelgröße der Salzkristalle lässt sich insbesondere über die lokale und mittlere Übersättigung sowie die Verteilung und die Verweilzeit der Salzkristalle in der übersättigten Waschlösung steuern. Innerhalb der Waschlösung können insbesondere kleine, mittlere und große Salzkristalle vorliegen, wobei diese Einteilung jeweils in Relation der Salzkristalle zueinander zu sehen ist. Mit anderen Worten sind die kleinen Salzkristalle kleiner als die mittleren Salzkristalle und die mittleren Salzkristalle sind wiederum kleiner als die großen Salzkristalle.

Im Wesentlichen erfolgen die Keimbildung und das Salzkristallwachstums im Kristallisator, in welchen eine Suspension aus Waschlösung und Salzkristallen insbesondere homogen verteilt und neu zugeführte Waschlösung untergemischt wird.

Bei dem Kristallisator handelt es sich bevorzugt um einen Kristallisator zur kontinuierlichen Kristallisation, das heißt, für den kontinuierlichen Betrieb. Der Kristallisator kann beispielsweise ein Rührwerk oder eine Umwälzpumpe und eine Vorrichtung zum Heizen und/oder Kühlen umfassen. Hierbei ist die wesentliche Aufgabe des Rührwerks bzw. der Umwälzpumpe, die Suspension aus Waschlösung und Salzkristallen möglichst homogen zu verteilen und die zugeführte Waschlösung unterzumischen. Die Vorrichtung zum Kühlen kann insbesondere zur Abkühlung der Temperatur der Waschlösung dienen.

Die Kristallisationskammer besteht aus einem im Wesentlichen zylinderförmigen Behälter, in welchem sich die Waschlösung und die wachsenden Salzkristalle befinden. In der Klassiereinrichtung erfolgt die Trennung der Salzkristalle ihrer Partikelgröße nach. Hierbei werden die großen Salzkristalle weitgehend von den mittleren und kleinen Salzkristallen getrennt. Durch die Trennung wird eine gezieltere Entnahme vor allem der großen Salzkristalle, welche sich einfacher von der Waschlösung trennen lassen, vereinfacht und die mittleren und kleinen Salzkristalle können zum weiteren Anwachsen in der Kristallisationskammer verbleiben. Bevorzugt ist die Waschlösung, bevor sie in den Kristallisator geleitet wird, beispielsweise durch einen Wärmetauscher, auf eine niedrige Temperatur, insbesondere auf 10°C - 15°C, gebracht worden. Dadurch kann die Kristallbildung der Salze ermöglicht bzw. gefördert werden.

Der Gegenstrom-Klassierer ist an der Bodenseite der Kristallisationskammer angeformt und umfasst seinerseits einen im Wesentlichen hohlzylindrischen Körper mit einem insbesondere trichterförmig verlaufenden Boden. An der Mantelfläche des hohlzylindrischen Körpers ist im unteren Bereich in Bodennähe eine Einlassöffnung vorgesehen, über die ein Gegenstrom, der den hohlzylindrischen Körper von der Einlassöffnung nach oben in Richtung Kristallisationskammer durchströmt, eingeleitet wird. Für die Trennung der Salzkristalle ihrer Partikelgröße nach werden sich hierbei die unterschiedlichen Sinkgeschwindigkeiten der Salzkristalle mit unterschiedlicher Partikelgröße zu Nutze gemacht, wobei die Sinkgeschwindigkeit der großen Salzkristalle größer ist als die Sinkgeschwindigkeit der mittleren und kleinen Salzkristalle. Die Salzkristalle, deren Sinkgeschwindigkeit geringer ist als die Geschwindigkeit des Gegenstroms, werden mit dem Gegenstrom nach oben in Richtung Kristallisationskammer transportiert. Salzkristalle mit höherer Sinkgeschwindigkeit bewegen sich durch den hohlzylindrischen Körper nach unten und sammeln sich am Boden der Klassiereinrichtung an. Dabei ist die Geschwindigkeit des Gegenstroms so eingestellt, dass diese kleiner ist als die Sinkgeschwindigkeit der großen Salzkristalle, aber größer als die Sinkgeschwindigkeit der mittleren und kleinen Salzkristalle. Somit sammeln sich am Boden der Klassiereinrichtung im Wesentlichen große Salzkristalle an, welche von dort abgezogen werden können.

Die erste Abzweigleitung dient der Entnahme von Waschlösung aus der Kristallisationskammer und der Zuführung zur zweiten Separiereinheit und zum nachgeschalteten Gegenstrom-Klassierer. Die zweite Separiereinheit ist hierbei so eingerichtet, dass sie insbesondere große und mittlere Salzkristalle, die sich in der entnommenen Waschlösung befinden, zurückhält. Diese zurückgehaltenen Salzkristalle werden bevorzugt mittels einer separaten Leitung wieder der Kristallisationskammer zugeführt, um eine entsprechende Feststoffkonzentration innerhalb der Waschlösung aufrecht zu erhalten, welche sich positiv auf die Kristallisationsleistung des Kristallisators auswirkt. Die im Wesentlichen nur noch kleine Salzkristalle enthaltende Waschlösung wird von der zweiten Separiereinheit aus über die erste Abzweigleitung in die Einlassöffnung des Gegenstrom-Klassierers geleitet, wo sie als Gegenstrom fungiert.

Die erste Separiereinheit ist zur Abtrennung der gebildeten Salzkristalle von der Waschlösung ausgebildet. Die durch die erste Separiereinheit abgetrennten Salzkristalle werden einer Lagerung, Entsorgung oder Verwertung zugeführt. Alternativ können insbesondere mittlere und kleine Salzkristalle dem Kristallisator vollständig oder teilweise wieder zugeführt werden, um eine entsprechende Feststoffkonzentration im Kristallisator aufrecht zu erhalten, was sich positiv auf die Kristallisationsleistung des Kristallisators auswirkt. Die Waschlösung, die möglichst keine Salzkristalle mehr enthält, kann insbesondere einer Absorptionseinheit einer Abscheidevorrichtung für Kohlendioxid zugeführt werden.

Die angegebene Abtrenneinheit hat den Vorteil, dass mit ihr Salze aus einer Waschlösung abgetrennt werden können. Die Abtrenneinheit ermöglicht es, dass die in einer Waschlösung gelösten Salze auskristallisieren und so als Festkörper in der Waschlösung vorliegen, wodurch sie durch eine erste Separiereinheit über eine verhältnismäßig einfache Fest-/ Flüssigtrennung dann von der Waschlösung getrennt werden können. Dabei wirkt sich ferner die entsprechend hohe Feststoffkonzentration innerhalb der Waschlösung im Kristallisator positiv auf die Kristallisationsleistung des Kristallisators aus.

Die zweite Separiereinheit ist zweckmäßigerweise als ein Filter ausgebildet. Dabei kann sie insbesondere ein kontinuierlich arbeitendes Filter, wie beispielsweise ein Kantenspaltfilter sein. Alternativ kann die zweite Separiereinheit auch als ein Hydrozyklon oder ein Separator ausgebildet sein.

In einer zweckmäßigen Ausführungsform umfasst die erste Separiereinheit eine Zentrifuge, welche insbesondere eine Siebzentrifuge sein kann. Diese trennt insbesondere die großen Salzpartikel von der Waschlösung ab. Desweiteren kann die erste Separiereinheit noch ein Filter umfassen, welches eventuell noch enthaltene mittlere und kleine Salzkristalle von der Waschlösung trennt. Anstelle der Kombination von Siebzentrifuge und Filter ist es insbesondere auch möglich, dass die erste Separiereinheit beispielsweise eine Siebschneckenzentrifuge umfasst, welche beide Funktionen in sich vereint.

In einer vorteilhaften Ausführungsform ist an den Kristallisator eine zweite Abzweigleitung angeschlossen, die über eine Zerkleinerungseinrichtung wieder in den Kristallisator zurückgeführt ist. Dem Kristallisator kann so über die zweite Abzweigleitung kontinuierlich oder periodisch Waschlösung entnommen werden und die darin enthaltenen Salzkristalle können einem Zerkleinerungsprozess in der Zerkleinerungseinrichtung, beispielsweise einer Mühle oder einem Dispergierer, unterzogen werden. Die zweite Abzweigleitung ist so eingerichtet, dass die zerkleinerten Salzkristalle dann mit der Waschlösung wieder dem Kristallisator zugeführt werden können. Auf diese Weise können dem Kristallisator mehr kleine Salzkristalle zur Verfügung gestellt werden, die anwachsen können, wodurch die Kristallisationsleistung des Kristallisators erhöht wird.

Innerhalb der Abtrenneinheit ist bevorzugt eine erste Zuführeinrichtung für Impfkristalle vorgesehen. Die Impfkristalle können der Waschlösung in dem Kristallisator zugegeben werden. Dort wachsen sie durch Kristallisation an.

Vorteilhafterweise ist innerhalb der Abtrenneinheit eine zweite Zuführeinrichtung für eine Base, insbesondere Kaliumhydroxid, vorgesehen. Durch Zugabe einer Base zum Waschmittel können Protonen abgefangen werden, die durch die Absorption saurer Gase und die Bildung der Salze entstehen.

Bevorzugt ist der ersten Separiereinheit ein "Sicherheits"-Filter nachgeschaltet. Durch das "Sicherheits"-Filter können Salzkristalle, die durch die erste Separiereinheit nicht abgetrennt wurden, zurückgehalten werden.

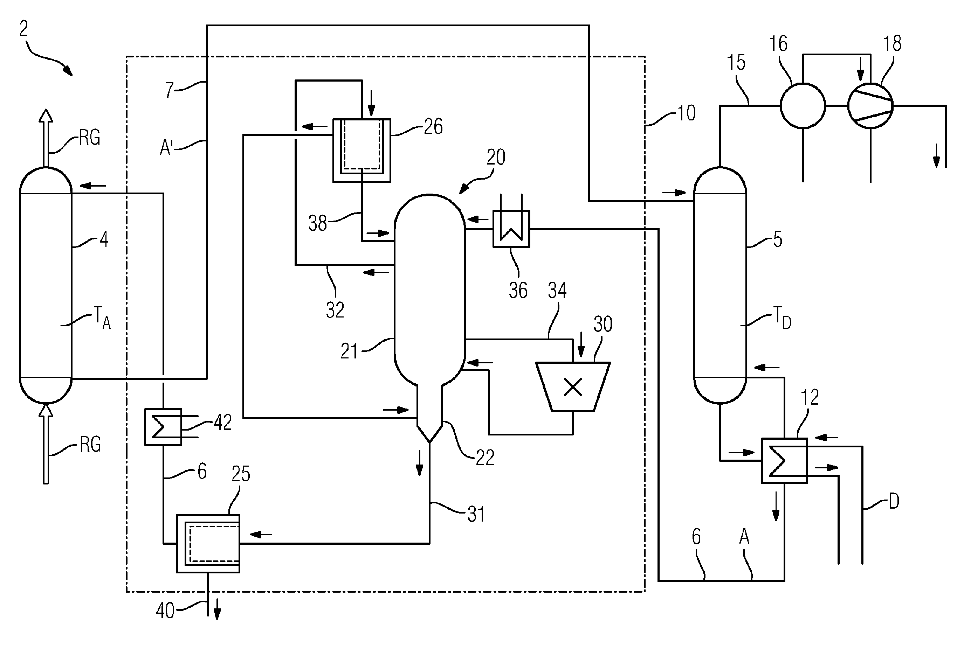

Nachfolgend wird ein Ausführungsbeispiel der Erfindung anhand der beigefügten Zeichnung näher erläutert. Darin zeigt die einzige Figur in schematischer Darstellung eine Abscheidevorrichtung mit Abtrenneinheit.

In der Figur ist in einer schematischen Darstellung eine Abscheidevorrichtung 2 für Kohlendioxid aus dem Rauchgas RG einer Verbrennungsanlage dargestellt. Die Abscheidevorrichtung 2 umfasst eine Absorptionseinheit 4 sowie eine Desorptionseinheit 5. Die Absorptionseinheit 4 ist über eine erste Leitung 6 für eine regenerierte Waschlösung A und über eine zweite Leitung 7 für eine beladene Waschlösung A' mit der Desorptionseinheit verbunden 5. Über die zweite Leitung 7 wird eine mit Kohlendioxid beladene Waschlösung A' aus der Absorptionseinheit 4 zur Regenerierung in die Desorptionseinheit 5 geführt. Über die erste Leitung 6 wird regenerierte Waschlösung A aus der Desorptionseinheit 5 erneut in die Absorptionseinheit 4 gebracht. Eine Abtrenneinheit 10 zur Abtrennung von Salzen aus der regenerierten Waschlösung A ist in die erste Leitung 6 geschaltet.

Der Desorptionseinheit 5 ist ein Reboiler 12 zugeordnet, durch den im Betriebsfall ein Prozessdampf D der Verbrennungsanlage zur Zuführung von Wärme geführt wird. Diese Wärme wird über eine Rezirkulation der Waschlösung A in die Desorptionseinheit 5 eingebracht, so dass darin befindliche Waschlösung A auf eine Desorptionstemperatur T_{D} erhitzt wird, so dass gelöstes Kohlendioxid thermisch desorbiert.

Im Betriebsfall wird das Rauchgas RG der Verbrennungsanlage der Absorptionseinheit 4 zugestellt. Dort wird das kühle Rauchgas RG in Gegenstrom mit regenerierter Waschlösung A in Kontakt gebracht, so dass enthaltenes Kohlendioxid absorbiert bzw. gelöst wird. Bei einer Absorptionstemperatur T_{A} weist die aminhaltige Waschlösung A eine hohe Beladungskapazität für Kohlendioxid auf. Das von Kohlendioxid befreite Rauchgas RG wird in die Atmosphäre entlassen.

Die mit Kohlendioxid beladene Waschlösung A' strömt zur Regenerierung in die Desorptionseinheit 5. Im Kopfbereich der Desorptionseinheit 5 wird über eine Gasleitung 15 kohlendioxidreiches Gas abgeleitet und über einen ersten Wärmetauscher 16 sowie einen sich anschließenden Verdichter 18 geführt. Mitgeführtes gasförmiges Kohlendioxid wird in dem Verdichter 18 verdichtet und für weitere Zwecke verwendet, z.B. in eine Aquifere injiziert oder in einen anderweitigen Kohlendioxidspeicher verfrachtet.

Die Abtrenneinheit 10 zur Abtrennung von Salzen aus der regenerierten Waschlösung A umfasst einen Kristallisator 20, bestehend aus einer Kristallisationskammer 21 und einem Gegenstrom-Klassierer 22, sowie zwei Separiereinheiten 25, 26 und eine Zerkleinerungseinrichtung 30. Die erste Separiereinheit 25 ist eingangsseitig über eine dritte Leitung 31 mit dem Gegenstrom-Klassierer 22 und ausgangsseitig über die erste Leitung 6 mit der Absorptionseinheit 4 verbunden. Die zweite Separiereinheit 26 ist über eine erste Abzweigleitung 32 eingangsseitig mit der Kristallisationskammer 22 des Kristallisators 20 und ausgangsseitig mit dem Gegenstrom-Klassierer 22 verbunden. Die Zerkleinerungseinrichtung 30 ist über eine zweite Abzweigleitung 34 mit der Kristallisationskammer 21 verbunden.

Die regenerierte Waschlösung A strömt im Betriebsfall über die erste Leitung 6 in die Kristallisationskammer 21 des Kristallisators 20. Bevor die regenerierte Waschlösung A in die Kristallisationskammer 21 eintritt, wird sie über einen zweiten Wärmetauscher 36 auf 10°C - 15°C abgekühlt. Durch diese Abkühlung nimmt die Löslichkeit der Salze in der regenerierten Waschlösung A ab und die auszukristallisierenden Salze werden in Übersättigung gebracht. Dadurch wird die Kristallbildung der Salze ermöglicht. In der Kristallisationskammer 21 erfolgen im Wesentlichen Keimbildung und Salzkristallwachstum. Im Kristallisator 20 liegen innerhalb der regenerierten Waschlösung A insbesondere kleine, mittlere und große Salzkristalle vor, wobei diese Einteilung jeweils in Relation der Salzkristalle zueinander zu sehen ist, das heißt, dass die kleinen Salzkristalle kleiner als die mittleren Salzkristalle und die mittleren Salzkristalle wiederum kleiner als die großen Salzkristalle sind.

Über die erste Abzweigleitung 32 wird der Kristallisationskammer 21 des Kristallisators 20 ein erster Teilstrom aus regenerierter Waschlösung A und Salzkristallen entnommen und der zweiten Separiereinheit 26 zugeführt. Die zweite Separiereinheit 26 hält große und mittlere Salzkristalle, die sich in dem entnommenen ersten Teilstrom befinden, zurück. Diese zurückgehaltenen Salzkristalle werden über eine vierte Leitung 38 der Kristallisationskammer 21 wieder zugeführt um die Feststoffkonzentration innerhalb des Kristallisators 20 hoch zu halten. Diese Salzkristalle wachsen im Kristallisator 20 weiter an. Der dann im Wesentlichen nur noch kleine Salzkristalle enthaltende erste Teilstrom wird in den Gegenstrom-Klassierer 22 geleitet, wo er als Gegenstrom fungiert. Dieser Gegenstrom durchströmt den Gegenstrom-Klassierer 22 entgegen der Sinkrichtung der Salzkristalle. Dabei ist die Geschwindigkeit des Gegenstroms so eingestellt, dass diese kleiner ist als die Sinkgeschwindigkeit der großen Salzkristalle, aber größer als die Sinkgeschwindigkeit der mittleren und kleinen Salzkristalle. Mittlere und kleine Salzkristalle, deren Sinkgeschwindigkeit kleiner ist als die Geschwindigkeit des Gegenstroms, werden mit dem Gegenstrom nach oben in Richtung Kristallisationskammer 21 transportiert. Die großen Salzkristalle, deren Sinkgeschwindigkeit größer ist als die Geschwindigkeit des Gegenstroms, sinken nach unten und sammeln sich am Boden des Gegenstrom-Klassierers 22 an. Somit ist eine gezieltere Entnahme großer Salzkristalle möglich, welche sich einfacher von der regenerierten Waschlösung A abtrennen lassen.

Aus der Kristallisationskammer 21 des Kristallisators 20 wird über die zweite Abzweigleitung 34 ein zweiter Teilstrom aus Waschlösung und Salzkristallen abgezogen und der Zerkleinerungseinrichtung 30 zugeführt. Die Zerkleinerungseinrichtung 30 zerkleinert die in dem zweiten Teilstrom enthaltenen Salzkristalle. Anschließend wird der zweite Teilstrom mit den zerkleinerten Salzkristallen wieder in die Kristallisationskammer 21 zurückgeführt. Auf diese Weise werden dem Kristallisator mehr kleine Salzkristalle zur Verfügung gestellt, die im Kristallisator (20) wachsen können, wodurch die Kristallisationsleistung des Kristallisators erhöht wird.

Über die dritte Leitung 31 wird vom Boden des Gegenstrom-Klassierers 22 eine insbesondere große Salzkristalle enthaltene regenerierte Waschlösung A entnommen und der ersten Separiereinheit 25 zugeführt. Diese trennt die Salzkristalle von der regenerierten Waschlösung A ab. Die durch die erste Separiereinheit 25 abgetrennten Salzkristalle werden über eine fünfte Leitung 40 einer Lagerung zugeführt. Die von Salzen weitgehend befreite regenerierte Waschlösung A wird über die erste Leitung 6 der Absorptionseinheit 4 zugeführt und dabei über einen zweiten Wärmetauscher 42 auf die Absorptionstemperatur T_{A} erwärmt.

## Patentansprüche

1. Abscheidevorrichtung (2) für Kohlendioxid, insbesondere aus einem Rauchgas (RG) eines fossil befeuerten Kraftwerks, umfassend eine Absorptionseinheit (4), eine der Absorptionseinheit (4) zugeordnete Desorptionseinheit (5) und eine Abtrenneinheit (10) zur Abtrennung von Salzen aus einer Waschlösung, wobei die Absorptionseinheit (4) und die Desorptionseinheit (5) über eine erste Leitung (6) für eine regenerierte Waschlösung (A) und eine zweite Leitung (7) für eine beladene Waschlösung (A') miteinander verbunden sind, und wobei die Abtrenneinheit (10) einen Kristallisator (20) zur Bildung von Salzkristallen und eine hierzu abströmseitige erste Separiereinheit (25) zur Abtrennung der Salzkristalle umfasst.

2. Abscheidevorrichtung (2) nach Anspruch 1, wobei die Abtrenneinheit (10) in die erste Leitung (6) geschaltet ist.

3. Abscheidevorrichtung (2) nach Anspruch 1 oder 2, wobei der Kristallisator (20) eine Kristallisationskammer (21) zur Bildung der Salzkristalle und eine Klassiereinrichtung (z.B. 22) zur Trennung der Salzkristalle ihrer Partikelgröße nach umfasst.

4. Abscheidevorrichtung (2) nach Anspruch 3, wobei die Klassiereinrichtung als ein Gegenstrom-Klassierer (22) ausgebildet ist.

5. Abscheidevorrichtung (2) nach Anspruch 4, wobei an die Kristallisationskammer (21) eine erste Abzweigleitung (32) angeschlossen ist, die über eine zweite Separiereinheit (26) in den Gegenstrom-Klassierer (22) mündet.

6. Abscheidevorrichtung (2) nach Anspruch 5, wobei die zweite Separiereinheit (26) als ein Filter ausgebildet ist.

7. Abscheidevorrichtung (2) nach einem der vorhergehenden Ansprüche, wobei die erste Separiereinheit (25) eine Zentrifuge umfasst.

8. Abscheidevorrichtung (2) nach einem der vorhergehenden Ansprüche, wobei an den Kristallisator (20) eine zweite Abzweigleitung (34) angeschlossen ist, die über eine Zerkleinerungseinrichtung (30) wieder in den Kristallisator (20) zurückgeführt ist.

9. Verfahren zur Abscheidung von Kohlendioxid, insbesondere aus einem Rauchgas (RG) eines fossil befeuerten Kraftwerks, wobei von einer Absorptionseinheit (2) zu einer Desorptionseinheit (5) eine beladene Waschlösung (A') und von der Desorptionseinheit (5) zur Absorptionseinheit (4) eine regenerierte Waschlösung (A) geführt wird, und wobei die Waschlösung (A) einer Abtrenneinheit (10) zugeführt wird, in welcher mittels eines Kristallisators (20) in der Waschlösung (A) Salzkristalle gebildet und mittels einer abströmseitigen Separiereinheit (25) abgetrennt werden.

10. Verfahren nach Anspruch 9, wobei die Salzkristalle in einer Kristallisationskammer (21) des Kristallisators (20) gebildet und in einer Klassiereinrichtung (22) des Kristallisators (20) ihrer Partikelgröße nach getrennt werden.

11. Verfahren nach Anspruch 10, wobei die Salzkristalle mittels eines Gegenstroms ihrer Partikelgröße nach getrennt werden.

12. Verfahren nach Anspruch 11, wobei aus der Kristallisationskammer (21) ein erster Teilstrom der Waschlösung abgezogen wird und in dem ersten Teilstrom enthaltene Salzkristalle abgetrennt werden, und wobei der erste Teilstrom der Klassiereinrichtung (22) als Gegenstrom zugeführt wird.

13. Verfahren nach Anspruch 12, wobei zur Abtrennung der Salzkristalle aus dem ersten Teilstrom filtriert wird.

14. Verfahren nach einem der Ansprüche 9 bis 13, wobei zur Abtrennung der Salzpartikel mittels der Separiereinheit (25) zentrifugiert wird.

15. Verfahren nach einem der Ansprüche 9 bis 14, wobei aus dem Kristallisator (20) ein zweiter Teilstrom der Waschlösung abgezogen und in dem zweiten Teilstrom enthaltene Salzkristalle zerkleinert werden, und wobei der zweite Teilstrom wieder in den Kristallisator (20) zurückgeführt wird.

16. Abtrenneinheit (10) zur Abtrennung von Salzen aus einer Waschlösung, umfassend (10) einen Kristallisator (20) und eine hierzu abströmseitige erste Separiereinheit (25) zur Abtrennung von Salzkristallen, wobei der Kristallisator (20) eine Kristallisationskammer (21) zur Bildung der Salzkristalle und einen Gegenstrom-Klassierer (22) zur Trennung der Salzkristalle ihrer Partikelgröße nach umfasst, und wobei an die Kristallisationskammer (21) eine erste Abzweigleitung (32) angeschlossen ist, die über eine zweite Separiereinheit (26) in den Gegenstrom-Klassierer (22) mündet.

17. Abtrenneinheit (10) nach Anspruch 16, wobei die zweite Separiereinheit (26) über eine Leitung (38) mit der Kristallisationskammer (21) zur Zuführung von abgetrennten Salzkristallen verbunden ist.

18. Abtrenneinheit (10) nach Anspruch 16 oder 17, wobei die zweite Separiereinheit (26) als ein Filter ausgebildet ist.

19. Abtrenneinheit (10) nach einem der Ansprüche 16 bis 18, wobei die erste Separiereinheit (25) eine Zentrifuge umfasst.

20. Abtrenneinheit (10) nach einem der Ansprüche 16 bis 19, wobei an den Kristallisator (20) eine zweite Abzweigleitung (34) angeschlossen ist, die über eine Zerkleinerungseinrichtung (30) wieder in den Kristallisator (20) zurückgeführt ist.
